# EUROPEAN PATENT APPLICATION

(11) **EP 4 796 381 A1**
(43) Date of publication of application: **26.08.2026**
(21) Application number: 25159509.6
(22) Date of filing: 21.02.2025
(51) Int. Cl.: B60N 2/803, B60N 2/72, B60N 2/005

(54) **VEHICLE SEAT REAR ASSEMBLY FOR A VEHICLE SEAT, VEHICLE SEAT, HEADREST CUSHION PART, VEHICLE AND METHOD FOR INSTALLING A VEHICLE SEAT INSIDE A CABIN OF A VEHICLE**

(71) Applicant: Volvo Car Corporation, 405 31 Göteborg (SE)
(72) Inventor: CARLSSON, Andreas, 40531 Göteborg (SE); KARLSSON, Markus, 40531 Göteborg (SE)
(74) Representative: Kransell & Wennborg KB

(57) **Abstract**

The disclosure relates to a vehicle seat rear assembly (16) for a vehicle seat (12). The vehicle seat rear assembly (16) comprises a headrest frame (24) being integrally formed with a back support frame (22) of the vehicle seat (12). Moreover, the vehicle seat rear assembly (16) comprises a headrest cushion part (20). The headrest cushion part (20) is movably coupled to the headrest frame (24) when in a release state (RS). The headrest frame (24) and the headrest cushion part (20) each comprise a fixing interface (42, 44) for permanently fixing the headrest cushion part (20) to the headrest frame (24) when in an operational state. Furthermore, a method for installing a vehicle seat (12) inside a cabin of a vehicle is provided.

## Description

### TECHNICAL FIELD

The present disclosure relates to a vehicle seat rear assembly for a vehicle seat. The vehicle seat rear assembly comprises a headrest frame being integrally formed with a back support frame of the vehicle seat.

Moreover, the present disclosure relates to a vehicle seat comprising the vehicle seat rear assembly.

Furthermore, the present disclosure is directed to a headrest cushion part for a vehicle seat rear assembly.

Beyond that, the present disclosure is directed to a vehicle comprising the vehicle seat rear assembly, the vehicle seat and/or the headrest cushion part.

Finally, the present disclosure provides a method for installing a vehicle seat inside a cabin of a vehicle.

### BACKGROUND ART

Today's vehicles keep getting optimized for aerodynamics in order to reduce fuel and/or energy consumption while driving.

One aspect of optimized aerodynamics of a vehicle is a low roofline of the vehicle. A low roofline of the vehicle reduces an overall surface of attack for airflow, thereby reducing aerodynamic drag. A low roofline often has the consequence of a comparatively small size of an opening of a vehicle cabin, i.e. a door, of the vehicle. In particular, a height of the opening, i.e. the door, may be small for a low roofline of the vehicle.

However, nowadays' safety requirements require comprehensive support of an occupant of the vehicle, particularly in case of a crash event. Especially the occupant's head needs to be thoroughly supported by a vehicle seat in order to prevent neck injuries to the SE:TOP
occupant in case of a frontal and/or a rear end crash.

This requires an increased overall height of today's vehicles' seats compared to past vehicle seats. Consequently, there is a certain potential of conflict between an increased size of a seat and a comparatively small opening of the vehicle cabin.

### SUMMARY

In order to solve or at least alleviate the delineated conflict of objectives, there may be a need for an improved vehicle seat.

The problem is at least partially solved or alleviated by the subject matter of the independent claims of the present disclosure, wherein further examples are incorporated in the dependent claims.

According to a first aspect, there is provided a vehicle seat rear assembly for a vehicle seat. The vehicle seat rear assembly comprises:
- a headrest frame being integrally formed with a back support frame of the vehicle seat, and
- a headrest cushion part.
The headrest cushion part is movably coupled to the headrest frame when in a release state. The headrest frame and the headrest cushion part each comprise a fixing interface for permanently fixing the headrest cushion part to the headrest frame when in an operational state.

If used by an occupant, the vehicle seat rear assembly typically supports a back and/or a head of the occupant. In order to do so, the back support frame provides structural stability to a backrest of the vehicle seat. The headrest frame being integrally formed with the back support frame may mean that the back support frame seamlessly merges into the headrest frame without any dedicated connection means there between. This ensures a high structural stability of the headrest frame and of the back support frame. If an adult occupant is using the vehicle seat, a transition between the back support frame and the headrest frame is typically in the vicinity, e.g. within approximately 30 cm, of a neck region of the occupant. According to the present disclosure, the headrest cushion part is coupled to the headrest frame both in the release state and in the operational state of the headrest cushion part. **In** the release state, the coupling between the headrest cushion part to the headrest frame is movable. This may comprise a translatory and/or a rotatory movability of the headrest cushion part with respect to the headrest frame. This has the effect that a physical extension of the vehicle seat rear assembly may be modified in the release state of the headrest cushion part by moving the headrest cushion part relative to the headrest frame. **In** particular, the physical extension of the vehicle seat rear assembly may be modified to have the vehicle seat rear assembly fit through a comparatively small opening of a vehicle cabin. **In** other words, the vehicle seat rear assembly may be rendered compact. Moreover, the automotive industry is currently trending towards having wider headrests, e.g. to enhance safety and/or to be able to incorporate more functionality in the headrest. That means that what herein is referred to as headrest cushion part may be significantly wider than the width of the headrest frame to which the headrest cushion part is arranged when in operational state. The backrest of a vehicle seat is at least as wide as the occupant's shoulders width, which also may be significantly wider than the width of the headrest frame. Hence, additionally, or alternatively, the present disclosure provides the advantage that when the headrest cushion part is in the release state, and the headrest cushion part is folded down towards the backrest, the vehicle seat will not be as bulky as would have been the case if the headrest cushion part would have been arranged to the headrest frame, i.e. when being in the operational state. In the operational state, the coupling between the headrest cushion part and the headrest frame is fixed. This may mean that no translatory and/or rotatory movement of the headrest cushion part with respect to the headrest frame is possible. Thus, the release state of the headrest cushion part may be defined as the headrest cushion part not being in the operational state and therefore not being permanently fixed to the headrest frame. The fixing of the headrest cushion part at the headrest frame is established by the fixing interfaces of the headrest cushion part and the headrest frame. Due to the engagement of the fixing interfaces of the headrest cushion part and of the headrest frame, a permanent fixing of the headrest cushion part with respect to the headrest frame is established. A permanent fixing is to be understood in that the headrest cushion part cannot be separated from the headrest frame without a destruction of any of the components fixed to each other. Altogether, the headrest cushion part of the vehicle seat rear assembly may be transferred from the release state into the operational state only once. In other words, once the headrest cushion part has been transferred into the operational state, it cannot be transferred back into the release state without destructive action. This has the effect that the headrest cushion part is firmly attached to the headrest frame once in the operational state. Thus, safety for an occupant of the vehicle using the vehicle seat, especially during a crash event, is enhanced.

In an example, when the headrest cushion part is in the operational state, the headrest cushion part extends beyond the headrest frame in a length direction of the back support frame. The headrest cushion part extending beyond the headrest frame means that the physical extension of the vehicle seat rear assembly including the headrest cushion part is larger than the physical extension of the vehicle seat rear assembly without the headrest cushion part. The physical extension is particularly measured in the length direction of the back support frame of the vehicle seat rear assembly. When in use, i.e. if mounted in a vehicle, the length direction of the back support frame extends substantially in a height direction. The length direction of the back support frame may be defined as a direction from a bottom of the back support frame to the headrest frame. The bottom of the back support frame is opposite the headrest frame on the vehicle seat rear assembly. The effect of the headrest cushion part extending beyond the headrest frame in the length direction of the back support frame when the headrest cushion part is in the operational state is that a surface of the vehicle seat rear assembly supporting an upper body, in particular a head, of an occupant of the vehicle using the vehicle seat is increased. Thus, especially in case of a frontal crash and/or a rear end crash of the vehicle, the upper body and, in particular, the head of the occupant of the vehicle is reliably and securely supported. This way, particularly neck injuries to the occupant can be avoided or at least their gravity can be reduced.

In an example, when the headrest cushion part is in the release state, the headrest frame extends beyond the headrest cushion part in the length direction of the back support frame. The headrest frame extending beyond the headrest cushion in the release state means that the physical extension of the vehicle seat rear assembly in the length direction of the back support frame is smaller if the headrest cushion part is in the release state than if the headrest cushion part is in the operational state. This has the effect that a physical extension of the vehicle seat rear assembly is reduced if the headrest cushion part is in the release state. Due to this, particularly an installation of a vehicle seat comprising the vehicle seat rear assembly into a cabin of the vehicle may be facilitated. This is because a reduced physical extension of the vehicle seat rear assembly may cause the vehicle seat rear assembly to fit more easily through an opening of the vehicle cabin. Also, the vehicle seat rear assembly having a smaller physical extension may enable the vehicle seat comprising the vehicle seat rear assembly to be transferred from an outside of the vehicle cabin into the inside of the vehicle cabin through a comparatively small opening of the vehicle cabin.

In an example, when the headrest cushion part is in the release state, the headrest cushion part extends along a first direction and when the headrest cushion part is in the operational state, the headrest cushion part extends along a second direction. The first direction and the second direction enclose an angle of 30° to 180°. This means that the headrest cushion part in the operational state is rotated relative to the headrest cushion part in the release state by an angle of 30° to 180°. It is noted that the rotation of the headrest cushion part between the release state and the operational state does not preclude that there may also be a translatory movement of the headrest cushion part when transferred from the release state into the operational state. In a particular example, the first direction and the second direction enclose an angle of 60° or 80° to 140°. In a further particular example, the first direction and the second direction enclose an angle of 110° or close to 110°. In general, as long as the angle between the first direction and the second direction leads to that the headrest cushion part does not extend above the extension of the headrest frame, the present disclosure provides said advantage of reduced height of the vehicle seat when being in the release state in comparison to the when being in the operational state. The configuration of the first direction of the headrest cushion part, when in the release state, and the second direction of the headrest cushion part, when in the operational state, enclosing an angle has the effect that a physical extension of the vehicle seat rear assembly may be modified by a rotation of the headrest cushion part. A rotation of the headrest cushion part is a comparatively simple movement that assembly personnel can perform during an assembly process of a vehicle comprising a vehicle seat that comprises the vehicle seat rear assembly of the present aspect. Thus, assembly personnel can quickly transfer the headrest cushion part from the release state into the operational state by a rotational movement and thereby permanently secure the headrest cushion part to the headrest frame.

In an example, the headrest cushion part is movably coupled to the headrest frame via a connection part when in the release state. This means that the headrest cushion part is not directly coupled to the headrest frame but indirectly via the connection part. Thus, there may be a movable coupling between the headrest cushion part and the connection part as well as between the connection part and the headrest frame. This enhances a freedom of movement of the headrest cushion part with respect to the headrest frame when in the release state. An enhanced freedom of movement of the headrest cushion part with respect to the headrest frame may allow a physical extension of the vehicle seat rear assembly to be reduced to a minimum when the headrest cushion part is in the release state. In other words, the vehicle seat rear assembly may be rendered very compact. It is noted that within the context of the present example, the physical extension may not only refer to an extension of the vehicle seat rear assembly along the length direction of the back support frame but also to a physical extension perpendicular thereto.

In an example, the connection part comprises at least one connection bar having a first end pivotably and/or slidably connected to the headrest cushion part and/or having a second end pivotably and/or slidably connected to the headrest frame. In other words, at the first end of the at least one connection bar, there may be a movable coupling between the at least one connection bar and the headrest cushion. The movable coupling may allow a rotatory and/or a translatory movement of the headrest cushion part with respect to the connection bar. At the second end of the at least one connection bar, there may be movable coupling between the connection bar and the headrest frame. The movable coupling may allow a rotatory and/or a translatory movement of the connection bar with respect to the headrest frame. It is noted that the movable couplings provided at both ends of the at least one connection bar may comprise any combination of pivotable and/or slidable connections. In a particular example, the first end of the at least one connection bar may be pivotably and slidably connected to the headrest cushion part. The second end of the at least one connection bar may also be pivotably and slidably connected to the headrest frame. In a further particular example, the first end of the at least one connection bar may only be pivotably connected to the headrest cushion part. The second end of the at least one connection bar may be pivotably and slidably connected to the headrest frame. Having pivotable and/or slidable connections at each end of the at least one connection bar connecting the headrest cushion part and the headrest frame further increases a freedom of movement of the headrest cushion part with respect to the headrest frame when in the release state.

In an example, the connection part comprises two connection bars. Each connection bar has a first end pivotably and/or slidably connected to the headrest cushion part and/or a second end pivotably and/or slidably connected to the headrest frame. The two connection bars may particularly be arranged in parallel to one another and may be equally long. By having two connection bars as connection part, a structural stability and reliability of the coupling between the headrest cushion part and the headrest frame is enhanced. The two connection bars may comprise the same types of connections, i.e. pivotable and/or slidable, at their respective first ends. Likewise, the two connection bars may comprise the same types of connections, i.e. pivotable and/or slidable, at their respective second ends. In a particular example, the first end of a first one of the two connection bars may only be pivotably connected to the headrest cushion part. Also the first end of a second one of the two connection bars may only be pivotably connected to the headrest cushion part. The second end of the first one of the two connection bars may be pivotably and slidably connected to the headrest frame. Also the second end of the second one of the two connection bars may be pivotably and slidably connected to the headrest frame. Having two parallel connection bars of the same lengths and the same types of connections at corresponding ends of the two connection bars enables the headrest cushion part to be precisely guided along a predefined path from the release state into the operational state. In particular, it may be ensured that the fixing interfaces of the headrest cushion part and of the headrest frame meet each other at a desired position and orientation relative to each other when the headrest cushion part is transferred into the operational state.

In an example, the two connection bars are formed as portions of a bracket. A bracket may be understood as a U-shaped or Ω-shaped part. In the bracket, the two connection bars are connected either at their respective first ends or at their respective second ends via a connecting link. Thus, the two connection bars and the connecting link form one entity of a connection part. Connecting the two connection bars at either their first ends or at their second ends enhances a torsional stiffness of the connection part. In a further example, the two connection bars are formed as portions of a connecting ring. A connecting ring may be understood as a ring in which the two connection bars are connected to each other via a connecting link at each of their first ends and at each of their second ends. In simplified words, a connecting ring may be regarded as a single chain element. Two parallel portions of the single chain element form the two connection bars. Connecting the two connection bars at both of their first ends and their second ends further enhances a torsional stiffness of the connection part. A high torsional stiffness of the connection part is desirable because it contributes to the fixing interfaces of the headrest cushion part and of the headrest frame meeting each other at a desired position and orientation relative to each other when the headrest cushion part is transferred into the operational state.

In an example, the fixing interface of the headrest frame comprises at least one hook and/or at least one lug and the fixing interface of the headrest cushion part comprises at least one lug and/or at least one hook. This means that for any hook and/or lug on the fixing interface of the headrest frame, there is a corresponding lug and/or hook on the fixing interface of the headrest cushion part. The hooks and/or lugs can interact to achieve said fixing between the headrest frame and the headrest cushion part. When transferred into the operational state, a hook and/or lug on the fixing interface of the headrest frame engages with a lug and/or hook on the fixing interface of the headrest cushion part. The engagement of hook and lug in the operational state is permanent. Thus, the engagement between the headrest cushion part and the headrest frame in the operational state may not be released without destructive action.

In an example, a length of the vehicle seat rear assembly in the release state of the headrest cushion part and a length of the vehicle seat rear assembly in the operational state of the headrest cushion part differs by 20 mm to 100 mm. The length of the vehicle seat rear assembly may be measured in a direction parallel to a length direction of the back support frame. Thus, also a height of a vehicle seat comprising the vehicle seat rear assembly differs by 20 mm to 100 mm. This has the effect that a physical extension of the vehicle seat rear assembly can be reduced in the release state in order to make the vehicle seat rear assembly fit more easily through an opening of the vehicle cabin during an installation of the vehicle seat comprising the vehicle seat rear assembly in an inside of the vehicle cabin. At the same time, when in the operational state, a large surface of the vehicle seat rear assembly for supporting an upper body, in particular a head, of an occupant of the vehicle using the vehicle seat is maintained in the operational state. Thus, especially in case of a frontal crash and/or a rear end crash of the vehicle, the upper body and, in particular, the head of the occupant of the vehicle is reliably and securely supported. This way, particularly neck injuries to the occupant can be avoided or at least their gravity can be reduced.

According to a second aspect, there is provided a vehicle seat comprising a vehicle seat rear assembly according to the first aspect. In the release state, a coupling between the headrest cushion part to the headrest frame of the vehicle seat rear assembly of the vehicle seat is movable. This has the effect that a physical extension of the vehicle seat, in particular a height, of the vehicle seat may be modified in the release state of the headrest cushion part by moving the headrest cushion part relative to the headrest frame. In other words, the vehicle seat may be rendered compact. The height of the vehicle seat may be measured in parallel to a length direction of the back support frame of the vehicle seat rear assembly. The physical extension of the vehicle seat may especially be modified in a way to have the vehicle seat fit through a comparatively small opening of a vehicle cabin. In the operational state, the coupling between the headrest cushion part and the headrest frame is permanently fixed. This has the effect that the headrest cushion part is firmly attached to the headrest frame once transferred from the release state into the operational state. Thus, safety for an occupant of the vehicle using the vehicle seat, especially during a crash event, is enhanced.

According to a third aspect, there is provided a headrest cushion part for a vehicle seat rear assembly of the first aspect. The headrest cushion part comprises a coupling interface for movably coupling the headrest cushion part to a headrest frame of the vehicle seat rear assembly. Moreover, the headrest cushion part comprises a fixing interface for permanently fixing the headrest cushion part to the headrest frame. The coupling interface may allow a pivotable and/or a slidable coupling of the headrest cushion part to the headrest frame. This has the effect that a position and/or an orientation of the headrest cushion part relative to the headrest frame connected thereto either directly without a connection part or indirectly via a connection part may be modified in a release state of the headrest cushion part. The fixing interface for establishing a permanent fixing of the headrest cushion part to the headrest frame in an operational state has the effect that safety for an occupant of the vehicle using a vehicle seat comprising the headrest cushion part is enhanced. This is particularly the case during a crash event of the vehicle.

In an example, the headrest cushion part further comprises a recess for accommodating at least a portion of the connection part. This way, the connection part that may be used to establish a movable coupling between the headrest cushion part and the headrest frame in the release state does not interfere with a permanent fixing of the headrest cushion part to the headrest frame in the operational state. This is because the connection part may at least partly be stowed in the recess of the headrest cushion part. Hence, the fixing interface of the headrest cushion part and a fixing interface of the headrest frame may be brought into direct contact and/or into a tight fit without the connecting part disturbing the contact and/or the fit.

In an example, the fixing interface comprises at least one lug and/or at least one hook for permanently fixing the headrest cushion part to the headrest frame. When transferred from the release state into the operational state, the hook and/or the lug on the fixing interface of the headrest cushion part engages with a lug and/or a hook on the fixing interface of the headrest frame. The engagement of hook and lug in the operational state is permanent. Thus, the engagement between the headrest cushion part and the headrest frame in the operational state may not be released without destructive action.

According to a fourth aspect, there is provided a vehicle comprising a vehicle seat rear assembly according to the first aspect, a vehicle seat according to the second aspect and/or a headrest cushion part according to the third aspect. Providing such a vehicle allows designing the vehicle with a comparatively small opening, i.e. door, in the vehicle cabin through which the vehicle seat comprising the vehicle seat rear assembly, which comprises the headrest cushion part, can be transferred when installing the vehicle seat inside the vehicle cabin. During the installation and particularly during the transfer of the vehicle seat through the opening in the vehicle cabin, the headrest cushion part is in the release state. Having a comparatively small opening in the vehicle cabin allows a comparatively low roofline of the vehicle. A low roofline of the vehicle provides a reduced surface of attack for airflow, thereby reducing aerodynamic drag. Reduced aerodynamic drag contributes to a reduced fuel and/or energy consumption of the vehicle while driving. At the same time, an upper body, especially a head, of an occupant of the vehicle can reliably be supported through a large surface of the vehicle seat rear assembly having the headrest cushion part in the operational state. Thus, safety for an occupant of the vehicle, especially during a crash event, is enhanced.

According to a fifth aspect, there is provided a method for installing a vehicle seat inside a cabin of a vehicle. The method comprises:
- providing the vehicle seat outside the cabin of the vehicle, wherein a headrest cushion part of a vehicle seat rear assembly of the vehicle seat is in the release state, and
- transferring the vehicle seat into the cabin, wherein the headrest cushion part is in the release state, and subsequently transferring the headrest cushion part into the operational state.

When the vehicle seat is provided outside the cabin of the vehicle, the headrest cushion part is already movably coupled to the headrest frame. Thus, the vehicle seat is provided as one entity. Optionally, the coupling also enables cables or wires, e. g. required for speakers arranged in the headrest cushion or for headrest cushion heating elements, or ventilation ducts, e.g. for neck-level heating/cooling systems arranged in or on the headrest cushion, to lead or to be pre-connected from the backrest of the vehicle seat to the headrest cushion part prior to the transferal of the vehicle seat into the vehicle cabin. This may enables that wired connections and/or or connections via air ducts may be prepared in advance to assembling the vehicle seat in the vehicle, e.g. next to the production line of the vehicle. The vehicle seat may therefore be delivered to the production line almost completely preassembled. Only the headrest cushion part remains to be transferred from the release state into the operational state once the vehicle seat is fixed to the inside of the vehicle cabin. This reduces manufacturing time on the production line as the movement that assembly personnel need to carry out to transfer the headrest cushion piece from the release state into the operational state is simple and quick to perform. During the transferal of the vehicle seat into the vehicle cabin, i.e. through an opening, i.e. a door, of the vehicle cabin, the headrest cushion part remains in the release state. This way, a physical extension, particularly along a height direction, of the vehicle seat is reduced. Due to this, a size of the opening, i.e. the door, in the vehicle cabin may be comparatively small. When the vehicle seat has reached the inside of the vehicle cabin, particularly after the vehicle seat has been fixed to the inside of the vehicle cabin, the headrest cushion piece is transferred into the operational state. The operational state is a state of permanent fixing of the headrest cushion part to the headrest frame of the vehicle seat. Also, the physical extension, particularly along the height direction, of the vehicle seat is increased in the operational state of the headrest cushion part compared to the release state of the headrest cushion piece. Due to this, an upper body, particularly a head, of an occupant of the vehicle using the seat may be reliably supported by a large surface of the vehicle seat. Thus, safety for an occupant of the vehicle using the vehicle seat, especially during a crash event, is enhanced.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a vehicle seat according to the present disclosure,
- Figure 2: shows the vehicle seat of Figure 1 comprising a vehicle seat rear assembly according to the present disclosure and a headrest cushion part according to the present disclosure in an operational state,
- Figure 3: shows the vehicle seat of Figure 2, wherein the headrest cushion part is in a release state,
- Figure 4: shows a detailed view of an upper part of the vehicle seat rear assembly of the vehicle seat of Figure 3, wherein the headrest cushion part is in the release state,
- Figure 5: shows a side view of the upper part of the vehicle seat rear assembly of Figure 4 illustrating a height difference of the vehicle seat depending on whether the headrest cushion part is in the operational state or in the release state,
- Figure 6a: shows a cross section through the headrest cushion part along line A-A in Figure 4, wherein the headrest cushion part is represented in a horizontal orientation,

- Figure 6b: shows a cross section through the headrest cushion part along line B-B in Figure 4, wherein the headrest cushion part is represented in a horizontal orientation,
- Figures 7: schematically shows steps of the method according to the present disclosure for installing a vehicle seat inside a cabin of a vehicle, and
- Figures 8a-c: illustrate steps of a method according to the present disclosure for installing a vehicle seat inside a cabin of a vehicle.

### DETAILED DESCRIPTION

The Figures are merely schematic representations and serve only to illustrate examples of the disclosure. Identical or equivalent elements are in principle provided with the same reference signs.

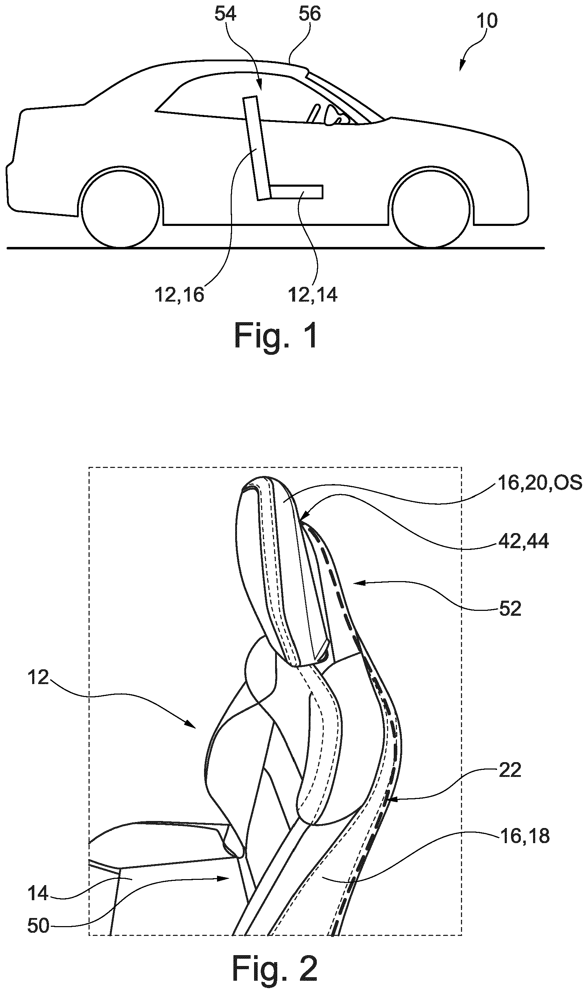

Figure 1 shows a vehicle 10.

The vehicle 10 comprises a vehicle seat 12. The vehicle seat 12 may serve as a seat for an occupant of the vehicle 10. In other words, the occupant may use the vehicle seat 12 while driving or riding in the vehicle 10.

Although the vehicle seat 12 is schematically shown as an individual front seat of the vehicle 10, the following considerations also apply to front benches having several front seats connected to form a single bench. Beyond that, the following considerations do not only apply to front seats or front benches of vehicles but to vehicle seats 12 and vehicle benches in general. In particular, the following considerations also apply to rear seats and rear benches of a vehicle 10.

Figure 2 shows the vehicle seat 12 of Figure 1 in more detail.

The vehicle seat 12 comprises a leg support 14 and a vehicle seat rear assembly 16. In this context, the leg support 14 may as well be designated as an upper leg support, femur support or gluteal region support.

The vehicle seat rear assembly 16 comprises a backrest 18 of the vehicle seat 12 and a headrest cushion part 20. If an occupant of the vehicle 10 is sitting in the vehicle seat 12, an upper body, in particular a back, of the occupant is supported by the backrest 18 of the vehicle seat 12 and a head of the occupant is supported by the headrest cushion part 20.

Inside the backrest 18, there is a back support frame 22 which is illustrated schematically only. The back support frame provides structural stability to the backrest 18, especially in order to enable the backrest 18 to support an upper body of an occupant sitting in the vehicle seat 12.

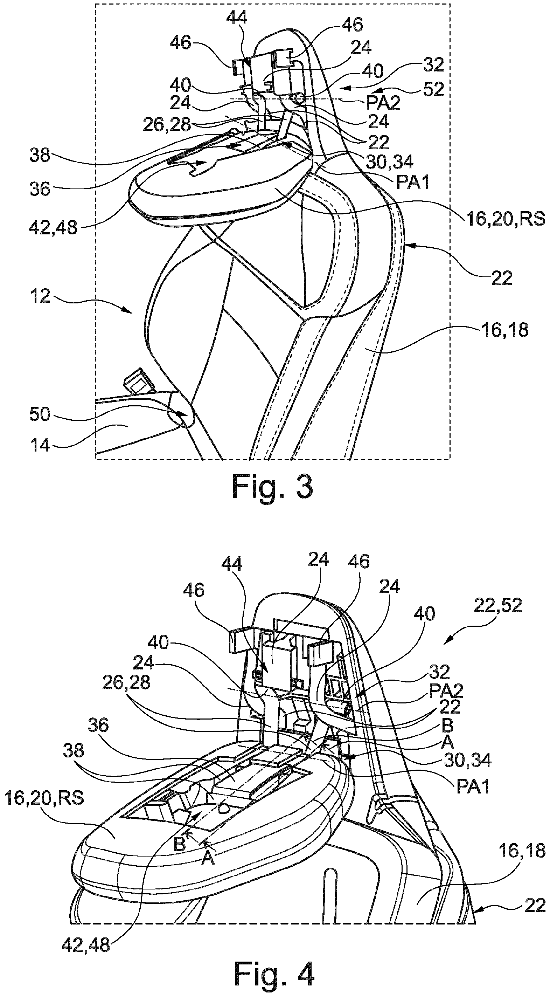

As can be seen from Figures 3 and 4, the back support frame 22 merges into a headrest frame 24 in a top region of the vehicle seat rear assembly 16. The top region of the vehicle seat rear assembly 16 is opposite to a side of the vehicle seat rear assembly 16 adjacent to the leg support 14 of the vehicle seat 12.

In other words, it may be said that the headrest frame 24 is integrally formed with the back support frame 22. This means that there is a seamless connection between the headrest frame 24 and the back support frame 22 without any connecting elements rather than the frames itself. Providing the back support frame 22 and headrest frame 24 as one part has the advantage that no potentially weakening joint or fastening between said parts is required, e.g. due to that the back support frame 22 and headrest frame 24 can be manufactured as one part.

The headrest cushion part 20 is coupled to the headrest frame 24, i.e. headrest cushion part 20 is suspended on the headrest frame 24, inter alia, in order to be able to support a head of an occupant sitting in the vehicle seat 12.

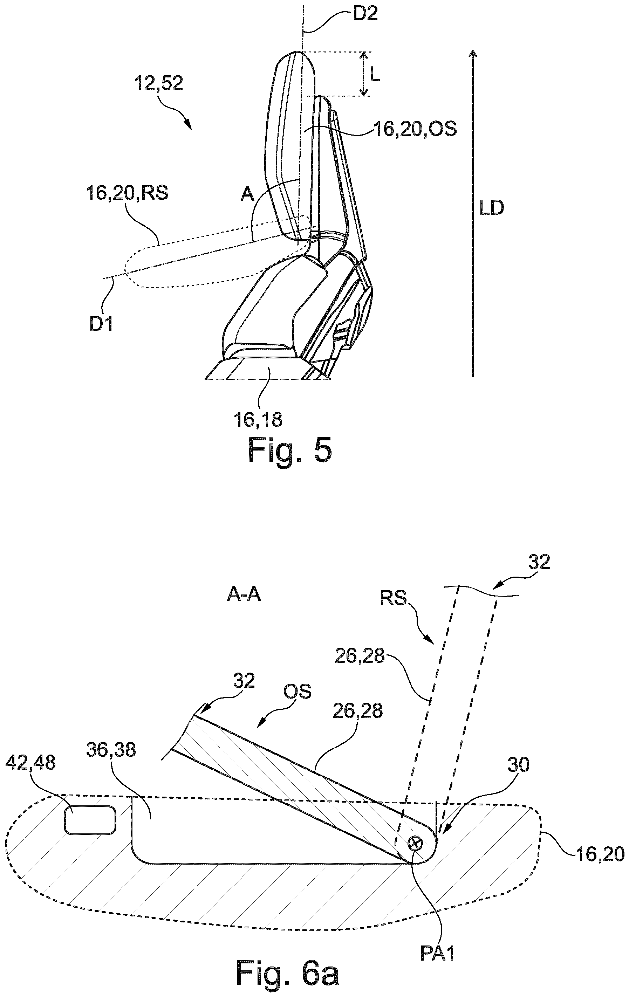

As can be seen from Figures 2 to 5, the headrest cushion part 20 may assume two different states, namely a release state RS and an operational state OS. The release state RS is shown in Figures 3 and 4 whereas the operational state OS is shown in Figure 2. Moreover, the release state RS is shown in Figure 5 by a dashed line representing the headrest cushion part 20. The operational state OS is shown in Figure 5 by a solid line representing the headrest cushion part 20.

In the release state RS, the headrest cushion part 20 is movably coupled to the headrest frame 24.

In the example shown in Figure 3, the movable coupling is achieved by a connection part 26.

The connection part 26 comprises two connection bars 28. However, it is also conceivable that the connection part 26 only comprises one connection bar 28.

Each connection bar 28 comprises a first end 30 and a second end 32.

At their respective first ends 30, the two connection bars 28 are connected by a connecting link 34. Thus, it may be said that the connection part 26 is U-shaped. In other words, it may be said that the connection part 26 is formed as a bracket.

By means of the connecting link 34, the connection part 26 engages with a coupling interface 36 of the headrest cushion part 20 in a rotatable manner. In other words, the connection part 26 is pivotably connected to the headrest cushion part 20 by means of the connecting link 34.

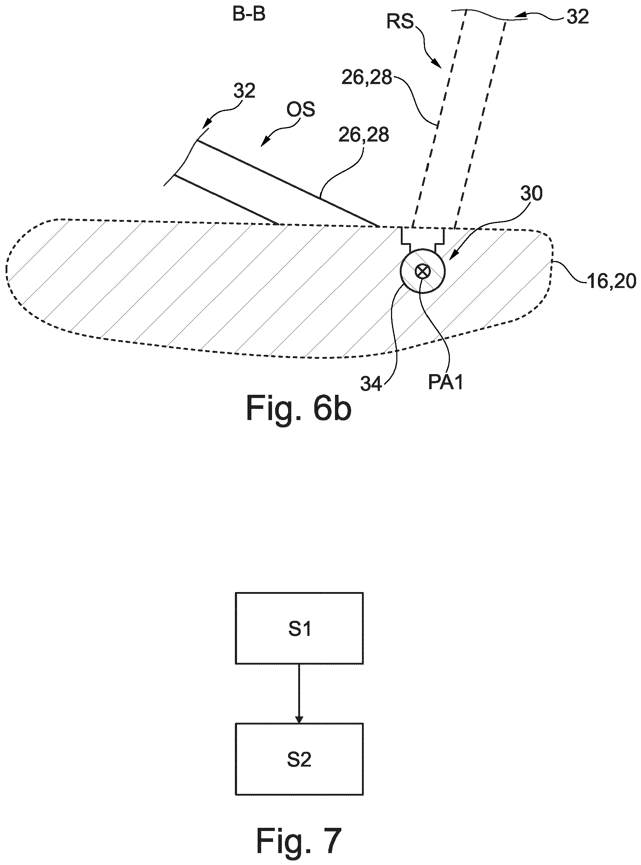

For establishing the pivotable connection, the coupling interface 36 of the headrest cushion part 20 comprises a recess 38. The recess 38 accommodates the connecting link 34 such that it can rotate around a first pivot axis PA1 (see especially Figure 6b). By rotating around the first pivot axis PA1, the connection part 26 is transferred from the release state RS (dashed line in Figure 6b) into the operational state OS (solid line in Figure 6b).

In the present example, the coupling between the headrest cushion part 20 and the connection part 26 only allows a rotational movement. However, also other types of connections are conceivable that allow a slidable connection or a slidable connection in combination with a rotatable connection.

At the respective second ends 32 of the two connection bars 28, there are extensions 40 of the U-shaped connection part 26. Each extension 40 protrudes in a substantially right angle from a connection bar 28 in a direction parallel to the connecting link 34 towards an outside of the U-shaped connection part 26. Thus, it may also be said that the connection part 26 comprises an Ω-shape.

The connection part 26 engages with the headrest frame 24 by means of said extensions 40. The extensions 40 are able to slide along headrest frame 24. At the same time, the extensions 40 provide a second pivot axis PA2 around which the connection part 26 can be rotated with respect to the headrest frame 24. Of course, since the extensions 40 may slide relatively to the headrest frame 24, also the second pivot axis PA2 may be movable relative to the headrest frame 24.

In the operational state OS, which is shown in Figure 2 and by the solid line representing the headrest cushion part 20 in Figure 5, the headrest cushion part 20 is permanently fixed to the headrest frame 24.

To this end, the headrest cushion part 20 and the headrest frame 24 each comprise a fixing interface 42, 44.

The fixing interface 44 of the headrest frame 24 comprises two hooks 46. Correspondingly, the fixing interface 42 of the headrest cushion part 20 comprises two lugs 48. It is understood that alternatively the fixing interface 42 of the headrest cushion part 20 may comprise at least one hook 46 and the fixing interface 44 of the headrest frame 24 may comprise at least one lug 48. Of course, each fixing interface 42, 44 may also comprise both at least one hook 46 and at least one lug 48.

In case the headrest cushion part 20 is transferred from the release state RS into the operational state OS, the headrest cushion part 20 gets fixed to the headrest frame 24 by means of the hooks 46 of the headrest frame 24 engaging with the lugs 48 of the headrest cushion part 20 in a permanent, i.e. non-releasable, manner.

Thus, the headrest cushion part 20 can be transferred from the release state RS into the operational state OS only once. A return from the operational state OS into the release state RS is not possible without destroying any of the headrest cushion part 20, the connection part 26, and/or the headrest frame 24.

The sectional view provided in Figure 6a shows that the recess 38 of the coupling interface 36 of the headrest cushion part 20 does not only accommodate the connecting link 34 of the connection part 26 in the release state (connection part 26 drawn by dashed line). When in the operational state (connection part 26 drawn by solid line), the recess 38 also partly accommodates the connections bars 28 of the connection part 26. This enables the fixing interface 42 of the headrest cushion part 42 to tightly fit the fixing interface 44 of the headrest frame 24.

The embodiment shown in Figure 3 to 6b, in comparison to other ways of accommodating the headrest cushion part can be in a release state and in an operational state. This has the additional advantage that it is clearly visible, and hard to miss for assembly personnel, that the headrest cushion part is not in the operational state. Generally, when being in the release state, the headrest cushion part will protrude in a clearly visible manner from the body of the vehicle seat.

Figures 3 to 5 show that, when in the release state RS, the headrest frame 24 extends beyond the headrest cushion part 20 in a length direction LD of the back support frame 22.

The length direction LD of the back support frame 22 is defined as being parallel to the shortest connection between a bottom 50 of the vehicle seat rear assembly 16 towards the top 52 of the vehicle seat rear assembly 16. The bottom 50 of the vehicle seat rear assembly 16 is that side of the vehicle seat rear assembly 16 that is adjacent to the leg support 14 of the vehicle seat 12 that the vehicle seat rear assembly 16 is mounted to.

In Figures 2 and 5, it is illustrated that, when in the operational state OS, the headrest cushion part 20 extends beyond the headrest frame 24 in the length direction LD of the back support frame 22. In Figure 5, this is indicated by the length L. The length L may range between 20 mm and 100 mm. In a particular example, the length L by which the headrest cushion part 20 extends beyond the headrest frame 24 in the operational state OS may be 60 mm.

Thus, a physical extension of the vehicle seat rear assembly 16 in the length direction LD of the back support frame 22 is increased when transferring the headrest cushion part 20 from the release state RS into the operational state OS. Put otherwise, it may be said that a physical extension of the vehicle seat rear assembly 16 in the length direction LD of the back support frame 22 is smaller if the headrest cushion part 20 is in the release state RS than if the headrest cushion part 20 is in the operational state OS.

The side view of the top region of the vehicle seat rear assembly 16 provided in Figure 5 shows that the increase in physical extension of the vehicle seat rear assembly 16 is achieved by the release state RS and the operational state OS of the headrest cushion part 20 enclosing an angle A between each other.

More precisely, in the side view provided in Figure 5, it may be said that, in the release state RS, the headrest cushion part 20 extends along a first direction D1. In the operational state OS, the headrest cushion part 20 extends along a second direction D2. The first direction D1 and the second direction D2 enclose the above-introduced angle A between each other. The angle A may be of a value of between 30° and 180°. In the present example, the angle A is of a value of 110°.

Due to the angle A that is enclosed between the first direction D1, which corresponds to the release state RS, and the second direction D2, which corresponds to the operational state OS, the release state RS may also be referred to as a folded-down state of the headrest cushion part 20. Likewise, the operational state OS may also be referred to as a folded-up state of the headrest cushion part 20.

In simplified words, one may state that a height of the vehicle seat 12 to which the vehicle seat rear assembly 16 is mounted is smaller if the headrest cushion part 20 is in the release state RS than if the headrest cushion part 20 is in the operational state OS.

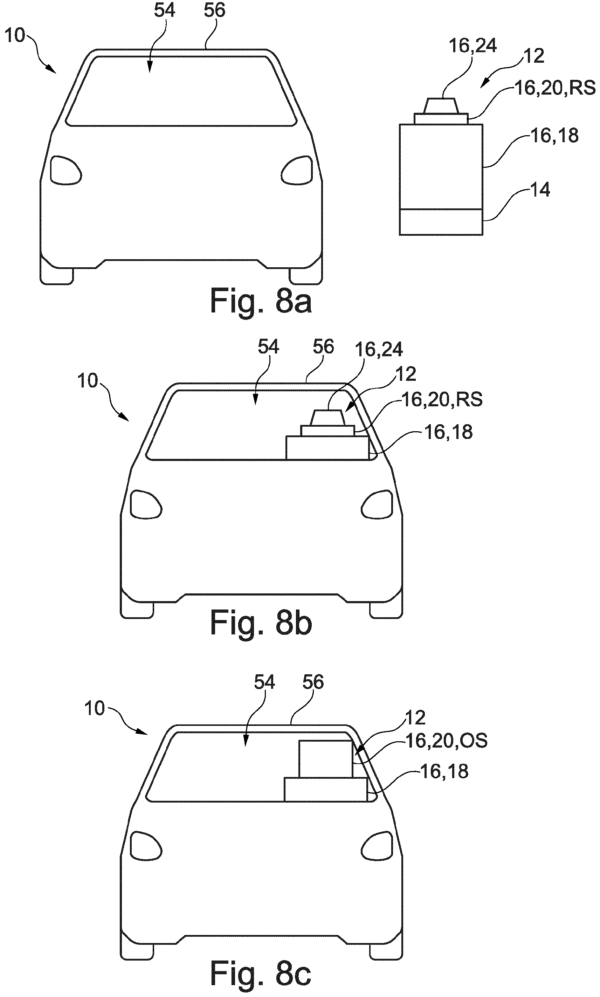

Figures 8a to 8c illustrate steps of a method for installing the vehicle seat 12 inside the cabin 54 of the vehicle 10. A sequence of the steps of the method is also schematically shown in Figure 7.

In a first step S1, the vehicle seat 12 is provided outside the vehicle cabin 54 (see Figure 8a). At this point, the headrest cushion part 20 is in the release state RS. Thus, a height of the vehicle seat 12 that is about to be installed inside the vehicle cabin 54 is reduced compared to a state of the vehicle seat 12 in which it is fully operationally mounted inside the vehicle cabin 54.

In a second step S2, the vehicle seat 12 is transferred into the vehicle cabin 54 through an opening thereof (see Figure 8b). In case a front vehicle seat 12 is being installed inside the vehicle cabin 54, the opening through which the front vehicle seat 12 is transferred is a front door opening of the vehicle cabin 54. In case a rear vehicle seat 12 is being installed inside the vehicle cabin 54, the opening through which the rear vehicle seat 12 is transferred is a rear door opening of the vehicle cabin 54. During the transfer, the headrest cushion part 20 is kept in the release state RS in order to minimize a physical extension of the vehicle seat rear assembly 16 along the length direction LD of the back support frame 22 and, thus, to minimize a height of the vehicle seat 12 that is being installed.

Since the height of the vehicle seat 12 is reduced when being transferred through the opening of the vehicle cabin 54, the opening of the vehicle cabin 54 may be designed comparatively small. This allows for a low roof line 56 of the vehicle 10, which reduces an overall surface of attack for airflow, thereby reducing aerodynamic drag of the vehicle 10. In this context, the surface of attack for airflow may as well be referred to as a frontal surface of the vehicle 10.

Still in the second step S2, once the vehicle seat 12 is securely attached to an inside the vehicle cabin 54, e.g. by bolts, the headrest cushion part 20 is transferred from the release state RS into the operational state OS. This point may be referred to as a fully operational mounted state of the vehicle seat 12 inside the vehicle cabin 54 (see Figure 8c). In this state, a height of the vehicle seat 12 installed inside the vehicle cabin 54 is increased compared to the state of the vehicle seat 12 in which it was being transferred through the opening of the vehicle cabin 54.

In the fully operational state of the vehicle seat 12, the vehicle seat 12 is ready to be used by an occupant of the vehicle 10. Particularly a head of an occupant can reliably and securely be supported in case of a crash of the vehicle because of the increased physical extension of the vehicle seat rear assembly 16. This reduces the risk and/or severity of neck injuries of an occupant of the vehicle in the event of a crash.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: vehicle seat
- 14: leg support
- 16: vehicle seat rear assembly
- 18: backrest
- 20: headrest cushion part
- 22: back support frame
- 24: headrest frame
- 26: connection part
- 28: connection bar
- 30: first end of connection bar
- 32: second end of connection bar
- 34: connecting link
- 36: coupling interface
- 38: recess
- 40: extension
- 42: fixing interface of headrest cushion part
- 44: fixing interface of headrest frame
- 46: hook
- 48: lug
- 50: bottom of vehicle seat rear assembly
- 52: top of vehicle seat rear assembly
- 54: vehicle cabin
- 56: roof line

- A: angle
- D1: first direction
- D2: second direction
- L: length
- LD: length direction
- OS: operational state
- PA1: first pivot axis
- PA2: second pivot axis
- RS: release state

## Claims

1. A vehicle seat rear assembly (16) for a vehicle seat (12), the vehicle seat rear assembly (16) comprising:
- a headrest frame (24) being integrally formed with a back support frame (22) of the vehicle seat (12), and
- a headrest cushion part (20),
wherein the headrest cushion part (20) is movably coupled to the headrest frame (24) when in a release state (RS), and
wherein the headrest frame (24) and the headrest cushion part (20) each comprise a fixing interface (42, 44) for permanently fixing the headrest cushion part (20) to the headrest frame (24) when in an operational state (OS).

2. The vehicle seat rear assembly (16) according to claim 1, wherein, in the operational state (OS), the headrest cushion part (20) extends beyond the headrest frame (24) in a length direction (LD) of the back support frame (22).

3. The vehicle seat rear assembly (16) according to claim 1 or 2, wherein, in the release state (RS), the headrest frame (24) extends beyond the headrest cushion part (20) in the length direction (LD) of the back support frame (22).

4. The vehicle seat rear assembly (16) according to any one of the preceding claims, wherein in the release state (RS), the headrest cushion part (20) extends along a first direction (D1) and in the operational state (OS), the headrest cushion part (20) extends along a second direction (D2), wherein the first direction (D1) and the second direction (D2) enclose an angle (A) of 30° to 180°.

5. The vehicle seat rear assembly (16) according to any of the preceding claims, wherein the headrest cushion part (20) is movably coupled to the headrest frame (24) via a connection part (26) when in the release state (RS).

6. The vehicle seat rear assembly (16) according to claim 5, wherein the connection part (26) comprises at least one connection bar (28) having a first end (30) pivotably and/or slidably connected to the headrest cushion part (20) and/or having a second end (32) pivotably and/or slidably connected to the headrest frame (24).

7. The vehicle seat rear assembly (16) according to claim 6, wherein the connection part (26) comprises two connection bars (28), each connection bar (28) having a first end (30) pivotably and/or slidably connected to the headrest cushion part (20) and/or a second end (32) pivotably and/or slidably connected to the headrest frame (24).

8. The vehicle seat rear assembly (16) according to any one of the preceding claims, wherein the fixing interface (44) of the headrest frame (24) comprises at least one hook (46) and/or at least one lug (48) and the fixing interface (42) of the headrest cushion part (20) comprises at least one lug (48) and/or at least one hook (46).

9. The vehicle seat rear assembly (16) according to any one of the preceding claims, wherein a length (L) of the vehicle seat rear assembly (16) in the release state (RS) of the headrest cushion part (20) and a length (L) of the vehicle seat rear assembly (16) in the operational state (OS) of the headrest cushion part (20) differs by 20 mm to 100 mm.

10. A vehicle seat (12) comprising a vehicle seat rear assembly (16) according to any of the preceding claims.

11. A headrest cushion part (20) for a vehicle seat rear assembly (16) of any one of claims 1 to 9, the headrest cushion part (20) comprising a coupling interface (36) for movably coupling the headrest cushion part (20) to a headrest frame (24) of the vehicle seat rear assembly (16) and a fixing interface (42) for permanently fixing the headrest cushion part (20) to the headrest frame (24).

12. The headrest cushion part (20) according to claim 11, further comprising a recess (38) for accommodating at least a portion of a connection part (26).

13. The headrest cushion part (20) according to claim 11 or 12, wherein the fixing interface (42) comprises at least one lug (48) and/or at least one hook (46) for permanently fixing the headrest cushion part (20) to the headrest frame (24).

14. A vehicle (10) comprising a vehicle seat rear assembly (16) according to any of claims 1 to 9, a vehicle seat (12) according to claim 10 and/or a headrest cushion part (20) according to any of claims 11 to 13.

15. A method for installing a vehicle seat (12) inside a cabin (54) of a vehicle (10), the method comprising:
- providing the vehicle seat (12) outside the cabin of the vehicle (10), wherein a headrest cushion part (20) of a vehicle seat rear assembly (16) of the vehicle seat (12) is in the release state (RS) (S1), and
- transferring the vehicle seat (12) into the cabin (54), wherein the headrest cushion part (20) is in the release state (RS), and subsequently transferring the headrest cushion part (20) into the operational state (OS) (S2).
